# EUROPEAN PATENT SPECIFICATION

(11) **EP 2 224 530 B1**
(45) Date of publication and mention of the grant of the patent: **30.09.2020**
(21) Application number: 09154051.8
(22) Date of filing: 27.02.2009
(51) Int. Cl.: H01M 8/04

(54) **System for a fuel cell powered device and fuel cell powered electronic device**
System für ein Gerät mit Brennstoffzellenbetrieb und ein elektronisches Gerät mit Brennstoffzellenbetrieb
Système pour un dispositif alimenté par pile à combustible et dispositif électronique alimenté par pile à combustible

(43) Date of publication of application: 01.09.2010
(73) Proprietor: BlackBerry Limited, Waterloo, ON N2K 0A7 (CA)
(72) Inventor: Rich, Dave, Waterloo Ontario N2I 1W6 (CA); Wu, Chee-Ming Jimmy, Waterloo Ontario N2V 2S9 (CA)
(74) Representative: Hanna Moore + Curley

(56) References cited:
- EP-A- 1 521 319
- WO-A1-00/35032
- US-A- 5 962 155
- US-A1- 2003 232 229
- US-A1- 2004 043 264
- US-A1- 2005 056 641

## Description

This relates generally to the field of fuel cells and, more specifically, to a system comprising a fuel tank of a fuel cell powered device and an attachment for the fuel tank, and to a fuel cell powered electronic device equipped with such an attachment and fuel tank.

Fuel cells have received a great deal of attention in recent years for their potential as electricity generators having a relatively low environmental impact. The basic principles of fuel cells have been understood for a long time, but they have had very little widespread use due to their comparatively high cost of production and the difficulty in managing their operation. In addition, while energy generation by a fuel cell typically produces very little in the way of chemical pollution, this benefit is often negated by the energy needed to produce and package the fuel for the fuel cell.

Different types of fuel cells also tend to have different operating parameters that can limit the effectiveness of a particular type for particular applications. For example, certain fuel cells operate at extremely high temperatures, while others require a compressed gas as a fuel source. These different requirements can create safety issues or limit the power capacity, longevity or other substantive characteristics of a fuel cell which, in turn, limits its utility for certain applications.

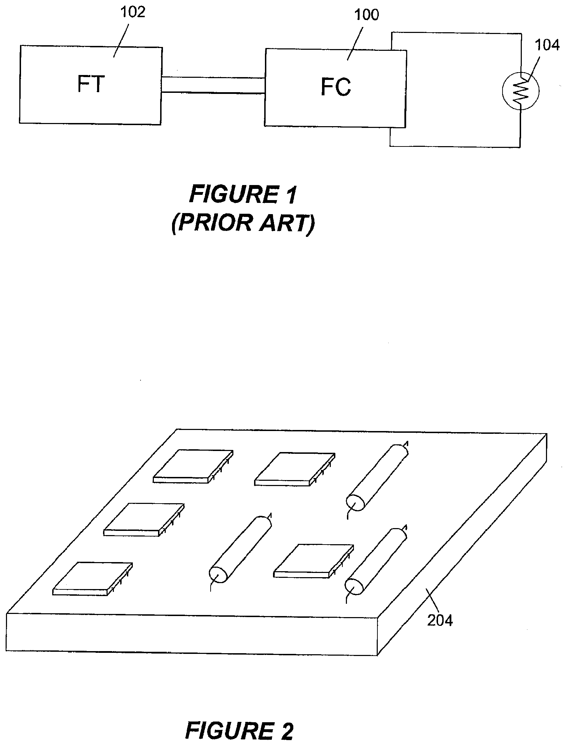

Despite the limitations of certain types of fuel cells, they remain a promising technology, particularly for certain power applications. The basic structure of a fuel cell is known in the art, and will not be discussed herein. However, an exemplary arrangement is shown in Figure 1, in which a fuel cell 100 is depicted schematically as providing electrical power to an electric load 104, which is representative of an electrical system deriving power from the fuel cell 100. For electricity generation, the fuel cell must maintain a reaction that requires a source of an appropriate fuel, *e.g*., hydrogen (H₂). In Figure 1, this source is represented as fuel tank 102, which has a fluid connection to the fuel cell 100. Depending on the type of fuel cell and fuel being used, different operating conditions must also be kept within a predetermined range. The operating temperature of the fuel cell, for example, is different from one type of fuel cell to another. In addition, the temperature of the fuel tank must be appropriate for the type of fuel being used, so as to ensure a proper flow of fuel into the fuel cell.

US 2003/232229 relates to an arrangement for improving the operating conditions when a unit is powered by a fuel cell.

### General

Accordingly there is provided a system as detailed in claim 1. Advantageous features are provided in the dependent claims. There is also provided a fuel cell powered electronic device as detailed in claim 4.

### Brief Description of the Drawings

For a better understanding of embodiments described herein, and to show more clearly how they may be carried into effect, reference will now be made, by way of example, to the accompanying drawings in which:
FIG. 1 is a schematic view of an arrangement of a fuel cell adapted to provide electrical power to an electrical load and a fuel tank delivering fuel to the fuel cell;
FIG. 2 is a schematic perspective view of a PCB (printed circuit board) such as those used in electronic devices;
FIG. 3 is a schematic side view of a PCB within an electronic device and a fuel cell fuel tank in thermal conduction therewith;
FIG. 4 is a schematic side view of a portion of a PCB with an attachment for a fuel tank, the attachment having a securing portion that is adapted to affix the attachment to an edge of the PCB;
FIG. 5A is a schematic side view of a PCB for a device with an attachment for a fuel tank, the attachment having a securing portion that is adapted to affix the attachment to the PCB and reside in an aperture in the PCB;
FIG. 5B is a schematic top view of a PCB like that of Figure 5A showing several apertures defined in the PCB for affixing an attachment adapted to be in thermal contact with an electrical component of the PCB;
FIG. 6A is a schematic perspective view of a PCB and a first and second surface of the attachment that is integral with the PCB;
FIG. 1 is a schematic view of an arrangement of a fuel cell adapted to provide electrical power to an electrical load and a fuel tank delivering fuel to the fuel cell;
FIG. 2 is a schematic perspective view of a PCB (printed circuit board) such as those used in electronic devices;

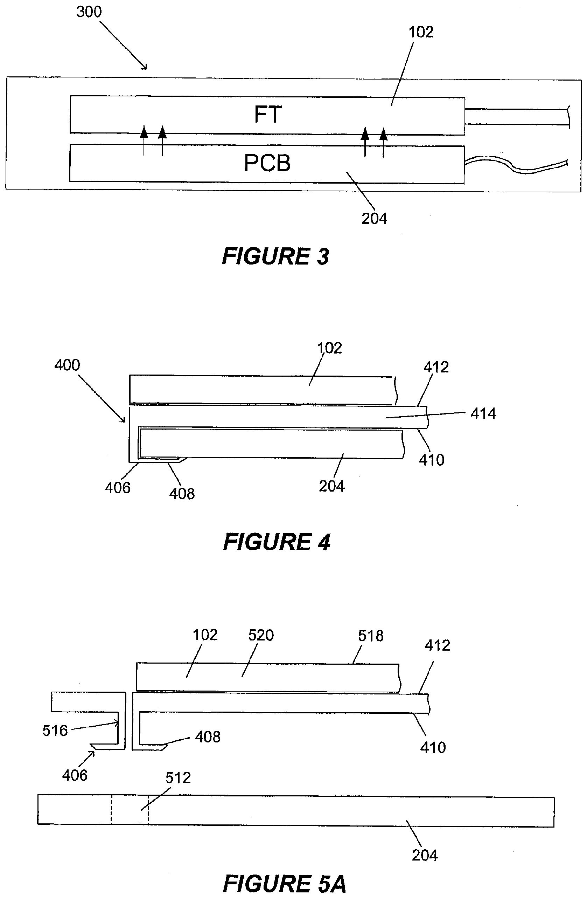

FIG. 3 is a schematic side view of a PCB within an electronic device and a fuel cell fuel tank in thermal conduction therewith;
FIG. 4 is a schematic side view of a portion of a PCB with an attachment for a fuel tank, the attachment having a securing portion that is adapted to affix the attachment to an edge of the PCB;
FIG. 5A is a schematic side view of a PCB for a device with an attachment for a fuel tank, the attachment having a securing portion that is adapted to affix the attachment to the PCB and reside in an aperture in the PCB;

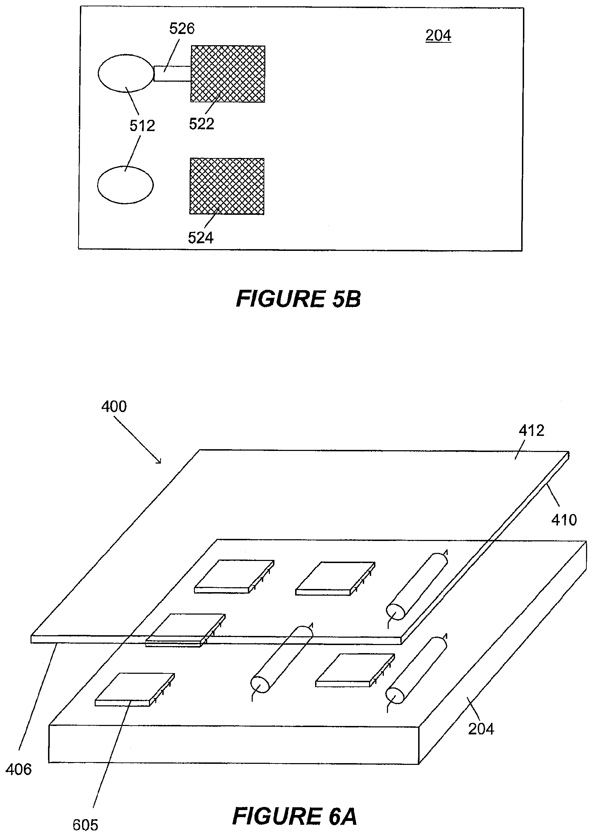

FIG. 5B is a schematic top view of a PCB like that of Figure 5A showing several apertures defined in the PCB for affixing an attachment adapted to be in thermal contact with an electrical component of the PCB;
FIG. 6A is a schematic perspective view of a PCB and a first and second surface of the attachment that is integral with the PCB;

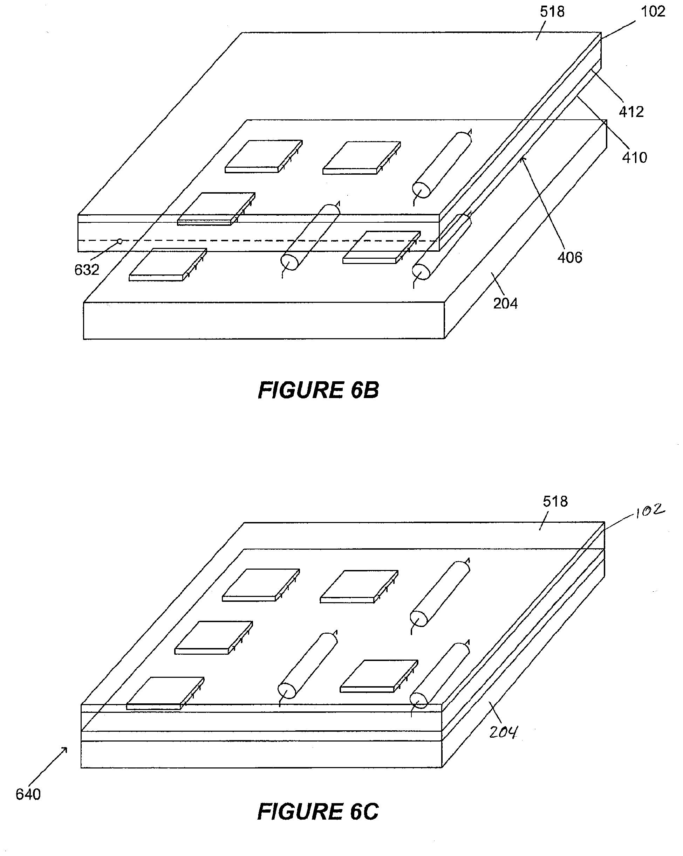

FIG. 6B is a schematic perspective view of the PCB of Figure 6A showing a top portion of the integral fuel tank and attachment system; and
FIG. 6C is a schematic perspective view of the PCB of Figures 6A and 6B showing the integral fuel tank and attachment system integrally adjacent to the PCB.

### Description of Preferred Embodiments

Presented in Figure 1 is shown an electric load 104 representative of any of a number of different electrical devices and components. One example of such a load is an electrical circuit having at least one electronic component mounted on a printed circuit board (PCB) or embedded in at least one IC (integrated circuit). The electric load 104 is powered by a fuel cell 100 connected to and using fuel stored in fuel tank 102.

Figure 2 is a schematic representation of a PCB 204 including a number of discrete electronic components. Many electronic components are well known for generating a significant amount of heat that must be dissipated to the ambient environment. This may be a particular problem with small, compact devices that lack the space necessary for efficient heat dissipation.

This disadvantage may be put to good use by thermally conducting heat generated by the PCB 204 to, and used by the fuel tank 102. As shown in Figure 3, the fuel tank 102 is located adjacent to the PCB 204, thus allowing thermal conduction there between. In certain fuel cell systems, the process of generating hydrogen from a fuel source (such as a metal hydride) is an endothermic reaction. In such fuel cells, a reaction is accomplished when heat is supplied to the fuel in the fuel tank 102. As PCBs 204 often generate heat, the thermal contact of the PCB 204 to the fuel tank 102 allows use of this heat to increase the temperature of the fuel in the fuel tank 102. For an endothermic reaction, using heat generated by adjacent components reduces, or removes completely the need for heat to be supplied from another source, while simplifying the mechanism for dissipating excess heat from the PCB 204.

To ensure appropriate thermal conduction between the PCB 204 and the fuel tank 102, particularly in the case of a portable device 300 which may undergo a significant amount of jostling, an attachment 400 is used between the fuel tank 102 and the PCB 204, as shown in Figure 4. The attachment 400 includes a thermal conductor 414. The thermal conductor 414 has a first surface 410 for thermally contacting directly or ultimately at least one heat-generating portion of the PCB 204 and a second surface 412 for thermally contacting directly or ultimately the fuel tank 102. The thermal conductor 414 conducts heat from the first surface 410 to the second surface 412, such that heat generated by the PCB 204 is absorbed by the fuel tank 102. For affixing the first surface 410 to the PCB 204, the attachment is provided with a securing portion 406. The second surface 412 is preferably affixed to the fuel tank 102 by any suitable means, or is part of the fuel tank 102. The first and second surfaces 410 and 412 of the thermal conductor 414 can be in direct contact with respectively the at least one heat-generating portion of the PCB 204 and the fuel tank 102. Alternatively, the first and second surfaces 410 and 412 could further be covered by a heat conducting material, which could serve as a protection for the thermal conductor 414.

The securing portion 406 further includes a lip 408 located in opposition with the first surface 410 of the attachment 400 such that an edge of the PCB 204 resides between the lip 408 and the first surface 410. Between the opposing lip 408 and the first surface 410 is a space within which an edge of the PCB 204 may be inserted for securing the attachment thereto. The space between the opposing lip 408 and the first surface 410 is sized so that the PCB 204 fits snugly between the first surface 410 and the opposing lip 408, thereby preventing relative movement between the fuel tank 102 and the PCB 204 in a direction perpendicular to the first surface 410 of the attachment 400. The size of the space and the elasticity of the opposing lip 408 may also be such that, when the edge of the PCB 204 resides in the space, a pressure fit is formed that resists movement of the PCB 204 in a direction parallel to the first surface 410. Similar opposing lips 408 may also extend from the attachment 400 at other edges of the PCB 204. For example, for the PCB 204 having a quadrilateral shape, the lip 408 may be used to secure two, three or even all four edges of the PCB 204 to thereby further restrict lateral movement of the PCB 204 relative to the fuel tank 102.

The attachment 400 may also be secured to the PCB 204 in other ways. In another aspect shown in Figure 5A, the attachment 400 is secured to the PCB 204 at one or more anchor points along its surface. An aperture 512 defined by the PCB 204 is indicated by broken lines. The aperture 512 provides an anchor point by which the attachment 400 may be attached to the PCB 204. The attachment 400 has the securing portion 406 that projects from the first surface 410 of the attachment 400 and that lies adjacent to the PCB 204. The securing portion 406 is shaped so that an intermediate section 516 fits within the aperture 512 of the PCB 204, and the opposing lip 408 extends in a direction parallel to the first surface 410, in opposition to that surface, and contacting a side of the PCB 204 opposite to the side contacted by the first surface 410. That is, the attachment 400 holds the fuel tank 102 in thermal contact with the PCB 204 by being effectively "clipped" to the PCB 204 via the securing portion 406 that fits together with the aperture 512. The intermediate section 516 of the securing portion 406 prevents any relative lateral movement between the PCB 204 and the fuel tank 102, and the lip 408 together with the first surface 410, prevents any relative movement of the PCB 204 and fuel tank 102 in the perpendicular direction. It will be understood by a person skilled in the art that it is possible for the attachment 400 to be also affixed to any other part of the device 300 such as to any electronic component or to a casing.

The single attachment 400 may have multiple securing portions 406 and thereby attach to multiple anchor points on the PCB 204. For example, as shown in Figure 5B, a top view of the PCB 204 indicates two apertures 512 within each of which may reside the securing portion 406 of the attachment 400. Having multiple anchor points helps to prevent any relative rotational movement of the fuel tank 102 and PCB 204, as well as translational movement in the three Cartesian directions. In this example, two integrated circuits (ICs) 522, 524 are shown mounted to the PCB 204 (other components may also be included, but are not shown in the figure for simplicity purposes). When the attachment 400 is mounted to the PCB 204 via the securing portions 406 that fit in the apertures 512, the fuel tank 102 resides in close thermal conduction with both ICs 522, 524 and thereby functions as a heat sink for both. A thermally conductive material 526 may also be located on the PCB 204 in contact with a component such as IC 522, providing extended thermal surface contact between the heat source (the IC) and the fuel tank 102. Such a material could be used to increase the effectiveness of the "heat sink" function of the fuel tank 102 by increasing the thermal conduction paths between the IC 522 and the fuel tank 102.

Back to Figure 5A, according to another aspect, the attachment 400 is an integral part of the fuel tank 102 structure. The first surface 410 of the attachment 400 has a flat profile and a shape that closely matches that of the PCB 204 so as to provide a high degree of heat transfer between the PCB 204 and the fuel tank 102. The first surface 410 and second surface 412 are in thermal conduction to allow the transfer of heat between the PCB 204 and the fuel tank 102. An interior space 520 of the fuel tank 102 in which the fuel is stored may further extend to the securing portion 406. This design provides additional fuel storage space, as well as additional surface area via which heat may be absorbed by the fuel tank 102. Those skilled in the art will recognize that the interior space 520 may also be limited to the flat region of the fuel tank 102.

According to yet another aspect, the attachment 400 has a shape that corresponds to the shape of the heat generating PCB 204 and physically conforms to the shape of the electronic components or ICs (522,524) of the PCB 204. As most PCBs 204 tend to be much larger in length and width than in thickness (*i.e.,* they tend to have a flat profile), thermal conduction can be enhanced if the first surface 410 of the attachment 400 has a shape that corresponds to the shape of the PCB 204. For doing so, the first surface 410 is designed in such a way that its profile matches a surface of the PCB 204.

Reference is now made to Figures 6A-6C, which depict yet another aspect. In this particular aspect, the PCB 204, the attachment 400, and the fuel tank 102 form a single integrated unit 640. The first surface 410 of the attachment 400 (shown separated from PCB 204 for clarity) is affixed with the securing portion 406 to a heat-generating portion of the PCB 204 in the orientation shown as part of an assembly process. When assembled, this first surface 410 serves as a thermal PCB contacting surface. The first surface 410 may be made of one or many different materials. There are also different means by which to seal the first surface 410 to the PCB 204.

The second surface 412 of the attachment 400 is part of the fuel tank 102 to create a fully enclosed interior space 520 (with the exception of one or more filling/output ports, which are not shown in the figure). Once the integrated unit 640 is assembled, the first surface 410 and the second surface 412 isolate the PCB 204 components from the fuel on the interior space 520 of the fuel tank 102. The fuel tank 102 may be designed in any desired shape and volume providing an interior space 520 within which the fuel may be stored.

The first surface 410 may be made of heat conducting deformable material, which can be applied to the PCB 204 as a conformal coating by a variety of different techniques. A top portion 518, which functions as the top and sides of the fuel tank 102, may be made of a material with sufficient rigidity at operating temperatures that it retains the desired shape of the fuel tank 102. Figure 6C depicts an example of such an integrated unit 640 once it has been assembled on the PCB 204. Those skilled in the art will recognize that, while the heat-generating portion of the PCB 204 is visible through the integrated attachment and fuel tank system shown in Figures 6A-6C, this particularity is used for graphical representation purposes only, and that it is not necessary for the integrated unit to be made of transparent material.

It is also described an electronic portable device including a fuel cell powered system and an attachment as previously described. Heat generation in an electronic portable device is of particular concern, and use of the heat generated by electronic components to improve performances of a fuel-powered system can be an asset. For doing so, the electronic portable device includes a fuel tank for storing fuel to be used by a fuel cell for electrical power generation. As previously described, the thermal conduction between the fuel tank and one or several heat generating electronic components is increased by use of the attachment. Any of the previously described aspects of the attachment can be used.

The foregoing aspects of the system are provided for exemplary purposes only. Those skilled in the art will recognize that various changes in form, material used and design may be made thereto without departing from the scope of protection sought which is defined by the appended claims.

## Claims

1. A system for a fuel cell powered device having a fuel cell and a printed circuit board (204) having a plurality of heat generating electronic components (522, 524, 605), the system comprising a fuel tank (102) for the fuel cell powered device and an attachment (400) for the fuel tank (102), wherein:
the fuel tank (102) is adapted to store a fuel source for generating hydrogen for the fuel cell by an endothermic reaction; and
the attachment is configured to be located between the fuel tank and the printed circuit board (204) of the fuel cell powered device, the attachment comprising:
a thermal conductor (414) having:
a first surface (410) for thermally contacting the plurality of heat generating electronic components (522, 524, 605) on the printed circuit board (204) of the fuel cell powered device; and
a second surface (412) for thermally contacting the fuel tank (102),
wherein the thermal conductor (414) is configured for conducting heat from the first surface (410) to the second surface (412) such that heat generated by the plurality of electronic components (522, 524, 605) is absorbed by the fuel tank (102); and
a securing portion (406) for affixing the first surface (410) to the printed circuit board (204), wherein the securing portion (406) comprises a lip (408) located in opposition with the first surface (410), wherein the lip is configured such that an edge of the printed circuit board (204) resides between the lip (408) and the first surface (410) and is retained therein.

2. The system of claim 1 wherein the securing portion (406) is adapted to reside within an aperture (512) defined by the printed circuit board (204).

3. The system of any preceding claim wherein the second surface (412) of the attachment (400) is part of the fuel tank (102) and defines an interior space for storing fuel.

4. A fuel cell powered electronic device (300) comprising:
a fuel cell comprising a printed circuit board (204) and a plurality of heat generating electronic components (522, 524, 605) on the printed circuit board (204); and
the system of any one of claims 1 to 3.

## Patentansprüche

1. System für eine brennstoffzellenbetriebene Vorrichtung mit einer Brennstoffzelle und einer Leiterplatte (204) mit mehreren wärmeerzeugenden elektronischen Komponenten (522, 524, 605), wobei das System einen Brennstofftank (102) für die brennstoffzellenbetriebene Vorrichtung und eine Befestigung (400) für den Brennstofftank (102) umfasst, wobei:
der Brennstofftank (102) dazu geeignet ist, eine Brennstoffquelle zur Erzeugung von Wasserstoff für die Brennstoffzelle durch eine endotherme Reaktion zu lagern; und
die Befestigung so konfiguriert ist, dass sie zwischen dem Brennstofftank und der Leiterplatte (204) der brennstoffzellenbetriebenen Vorrichtung angeordnet ist, wobei die Befestigung Folgendes umfasst:
einen Wärmeleiter (414) mit:
einer ersten Oberfläche (410) zum thermischen Kontaktieren der mehreren wärmeerzeugenden elektronischen Komponenten (522, 524, 605) auf der Leiterplatte (204) der brennstoffzellenbetriebenen Vorrichtung; und
einer zweiten Oberfläche (412) zum thermischen Kontaktieren des Brennstofftanks (102), wobei der thermische Leiter (414) zum Leiten von Wärme von der ersten Oberfläche (410) zu der zweiten Oberfläche (412) konfiguriert ist, so dass die von den mehreren elektronischen Komponenten (522, 524, 605) erzeugte Wärme vom Brennstofftank (102) absorbiert wird; und
einem Befestigungsabschnitt (406) zum Befestigen der ersten Oberfläche (410) an der Leiterplatte (204), wobei der Befestigungsabschnitt (406) eine Lippe (408) umfasst, die gegenüber der ersten Oberfläche (410) angeordnet ist, wobei die Lippe so konfiguriert ist, dass eine Kante der Leiterplatte (204) zwischen der Lippe (408) und der ersten Oberfläche (410) liegt und darin gehalten wird.

2. System nach Anspruch 1, wobei der Sicherungsabschnitt (406) so angepasst ist, dass er sich in einer Öffnung (512) befindet, die durch die Leiterplatte (204) definiert ist.

3. System nach einem der vorhergehenden Ansprüche, wobei die zweite Oberfläche (412) der Befestigung (400) Teil des Brennstofftanks (102) ist und einen inneren Raum zur Lagerung von Brennstoff definiert.

4. Brennstoffzellenbetriebene elektronische Vorrichtung (300), umfassend:
eine Brennstoffzelle, umfassend eine Leiterplatte (204) und mehrere wärmeerzeugende elektronische Komponenten (522, 524, 605) auf der Leiterplatte (204); und
das System nach einem der Ansprüche 1 bis 3.

## Revendications

1. Système pour un dispositif alimenté par une pile à combustible ayant une pile à combustible et une carte de circuit imprimé (204) ayant une pluralité de composants électroniques générant de la chaleur (522, 524, 605), le système comprenant un réservoir de combustible (102) pour le dispositif alimenté par une pile à combustible et un accessoire (400) pour le réservoir de combustible (102), dans lequel :
le réservoir de combustible (102) est conçu pour stocker une source de combustible afin de générer de l'hydrogène pour la pile à combustible par une réaction endothermique ; et
l'accessoire est configuré pour être situé entre le réservoir de combustible et la carte de circuit imprimé (204) du dispositif alimenté par une pile à combustible, l'accessoire comprenant :
un conducteur thermique (414) ayant :
une première surface (410) pour entrer en contact thermique avec la pluralité de composants électroniques générant de la chaleur (522, 524, 605) sur la carte de circuit imprimé (204) du dispositif alimenté par une pile à combustible ; et
une seconde surface (412) pour entrer en contact thermique avec le réservoir de combustible (102), le conducteur thermique (414) étant configuré pour conduire la chaleur de la première surface (410) à la seconde surface (412) de sorte que la chaleur générée par la pluralité de composants électroniques (522, 524, 605) est absorbée par le réservoir de combustible (102) ; et
une partie de fixation (406) pour fixer la première surface (410) à la carte de circuit imprimé (204), la partie de fixation (406) comprenant une lèvre (408) située à l'opposé de la première surface (410), la lèvre étant configurée de sorte qu'un bord de la carte de circuit imprimé (204) se trouve entre la lèvre (408) et la première surface (410) et y est retenu.

2. Système selon la revendication 1, dans lequel la partie de fixation (406) est conçue pour se trouver à l'intérieur d'une ouverture (512) définie par la carte de circuit imprimé (204).

3. Système selon l'une quelconque des revendications précédentes, dans lequel la seconde surface (412) de l'accessoire (400) fait partie du réservoir de combustible (102) et définit un espace intérieur pour stocker du combustible.

4. Dispositif électronique (300) alimenté par une pile à combustible comprenant :
une pile à combustible comprenant une carte de circuit imprimé (204) et une pluralité de composants électroniques générant de la chaleur (522, 524, 605) sur la carte de circuit imprimé (204) ; et
le système selon l'une quelconque des revendications 1 à 3.
